# EUROPEAN PATENT SPECIFICATION

(11) **EP 1 936 964 B1**
(45) Date of publication and mention of the grant of the patent: **31.08.2011**
(21) Application number: 07117416.3
(22) Date of filing: 27.09.2007
(51) Int. Cl.: H04N 5/445

(54) **Apparatus and method for displaying a broadcast**
Vorrichtung und Verfahren zur Anzeige von Rundfunksendungen
Appareil et procédé d'affichage de diffusion

(30) Priority: 21.12.2006 KR 20060131646
(43) Date of publication of application: 25.06.2008
(73) Proprietor: Samsung Electronics Co., Ltd., Suwon-si, Gyeonggi-Do (KR)
(72) Inventor: Lee, Joo-heon, Gyeonggi-do (KR); Han, Hee-ju, Gyeonggi-do (KR)
(74) Representative: Clark, Charles Robert

(56) References cited:
- WO-A2-2004/023784
- US-A1- 2003 028 884
- US-A1- 2003 126 607
- US-A1- 2005 028 195
- US-A1- 2006 045 470
- US-B1- 6 536 041
- US-B1- 6 757 906

## Description

Apparatuses and methods consistent with the present invention relate to displaying a broadcast. More particularly, but not exclusively, the present invention relates to displaying a broadcast on which information regarding programs scheduled for broadcast may be displayed.

Each broadcast station providing terrestrial a broadcast, cable broadcast, and/or a satellite broadcast, provides an Electronic Program Guide (EPG) which enables a viewer to receive broadcast program information directly from image display apparatuses, such as televisions (TVs), without accessing other media such as newspapers and magazines.

The EPG information, together with a video stream and an audio stream of the digital broadcast, are compressed into a transport stream (TS), and transmitted to a TV receiver. The TV receives, tunes and demodulates the TS, and the demodulated stream is demultiplexed to extract the video stream, audio stream, and EPG information. The TV may provide a user with the broadcast program information through the EPG information.

The EPG information allows a user to receive the broadcast program information to schedule in advance a broadcast program which the user desires to view or record. If a viewer schedules a broadcast program, a current channel may be switched to a channel of the scheduled broadcast program at the broadcast time of the broadcast program scheduled through the EPG information.

A list of broadcast programs scheduled by a user is displayed by various methods. Since the number of lists of the scheduled broadcast programs capable of being displayed on a single screen of a display apparatus is limited, as the number of lists of scheduled broadcast programs increases, several operations need to be repeated in order to check broadcast programs not displayed on a single screen or to delete the scheduled broadcast programs, which causes inconvenience.

Additionally, a broadcast schedule list is generally displayed on the center of the screen except for WO 2004/023784 which displays a banner for programmes currently on air, and thus the list covers a broadcast currently being displayed. In addition, if a broadcast program scheduled to be recorded is being received, it is not possible for a user to recognize information on the broadcast program being recorded and the recording progress.

The invention is as set out in claims 1 and 8.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

The present invention aims to provide an apparatus and method for displaying an image in which a broadcast schedule list is displayed in the form of a sliding banner so that a user can conveniently check the list.

According to an aspect of the present invention, there is provided an image display apparatus comprising a storage unit which stores information on broadcast programs scheduled for broadcast; and a controller which reads out the stored broadcast program information so that the information is displayed in the form of a sliding banner on one side of a screen.

The apparatus may further comprise a user interface unit which receives user input regarding a sliding banner display period and the number of broadcast programs to be displayed in the form of the sliding banner. The controller may read out from the storage unit the broadcast program information for as many as the number of the broadcast programs input through the user interface unit, and arrange the read broadcast program information in the order of the broadcast time to display the information in the form of the sliding banner according to the input sliding banner display period.

The controller may cause a light to flash on the screen to indicate information on a currently received broadcast program from the broadcast program information displayed in the form of the sliding banner, if the broadcast programs scheduled for broadcast are received.

The controller may cause a light to flash on the screen to indicate information on a currently received broadcast program from the broadcast program information displayed in the form of the sliding banner, and to alternately display a recording progress bar indicating the recording status of the currently received broadcast program and the sliding banner, if a broadcast program scheduled for recording is received.

The controller may display a recording progress bar indicating the recording status, if the broadcast programs scheduled for broadcast are received and recorded.

The controller may alternately display the recording progress bar and the sliding banner.

The controller may display the broadcast program information in the form of the sliding banner at the bottom of the screen.

The controller may change at least one of the display color, the font size and the display text of the information on the currently received broadcast program from the broadcast program information displayed in the form of the sliding banner to a type different from information on other broadcast programs, and display the information, if one of the broadcast programs scheduled for broadcast is received.

The broadcast schedule may be one of a viewing schedule and a recording schedule.

According to another aspect of the present invention, there is provided a method for displaying a broadcast schedule list of an image display apparatus, the method comprising reading out information on broadcast programs pre-scheduled for broadcast, if a broadcast schedule enable command is input; and displaying the read broadcast program information in the form of a sliding banner on one side of a screen.

The displaying may comprise arranging the broadcast program information for as many as a preset number of broadcast programs in the order of the broadcast time so that the information is displayed in the form of the sliding banner according to a regular period.

The method may further comprising having a light flashing to indicate information on a currently received broadcast program from the broadcast program information displayed in the form of the sliding banner, if the broadcast programs scheduled for broadcast are received.

The sliding banner on which the light flashes may be displayed alternately with a recording progress bar indicating the recording status, if a broadcast program scheduled for recording is received.

The method may further comprise displaying a recording progress bar indicating the recording status, if the broadcast programs scheduled for broadcast are received and recorded.

The recording progress bar may be displayed alternately with the sliding banner.

The displaying may comprise displaying the broadcast program information in the form of the sliding banner at the bottom of the screen.

The method may further comprise changing at least one of the display color, the font size and the display text of the information on the currently received broadcast program from the broadcast program information displayed in the form of the sliding banner to a type different from information on other broadcast programs, and displaying the information, if one of the broadcast programs scheduled for broadcast is received.

The above and/or other aspects of the present invention will be more apparent by describing certain exemplary embodiments of the present invention with reference to the accompanying drawings, in which:
Figure 1 is a block diagram of an image display apparatus according to an exemplary embodiment of the present invention;
Figure 2 is a detailed block diagram of the image display apparatus of Figure 1;
Figures 3 to 5B are exemplary views showing a broadcast schedule list displayed on a screen, according to an exemplary embodiment of the present invention;
Figure 6 is a flowchart explaining a method for displaying a broadcast schedule list of an image display apparatus according to another exemplary embodiment of the present invention; and
Figure 7 is a flowchart explaining in detail the method of Figure 6 according to another exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure exemplary embodiments of the present invention with unnecessary detail.

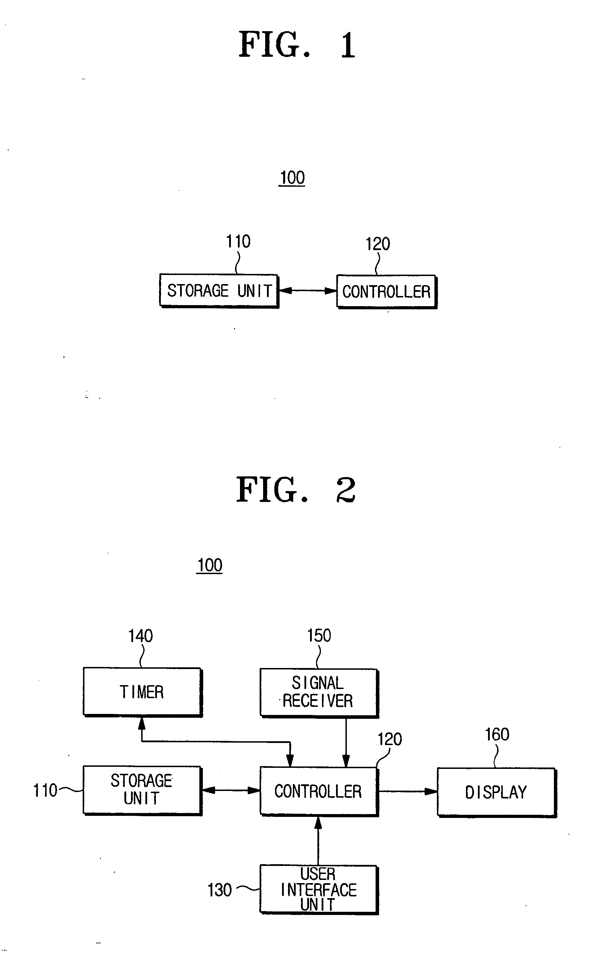

Figure 1 is a block diagram of an image display apparatus according to an exemplary embodiment of the present invention. In Figure 1, an image display apparatus 100 comprises a storage unit 110 and a controller 120. The image display apparatus 100 may enable a user to schedule broadcast programs using broadcast program information provided from an Electronic Program Guide (EPG).

The storage unit 110 stores information on broadcast programs scheduled for broadcast. This broadcast program information is sorted and stored according to the broadcast program. The broadcast program information may comprise information relating to the name of the broadcast station providing the broadcast program, the channel number of the received broadcast, the broadcast time of the broadcast program, and the broadcast program title.

The controller 120 reads out the information on the scheduled broadcast programs so that the information can be displayed in the form of a sliding banner on one side of a screen. The controller 120 checks the broadcast time of the scheduled broadcast program, and reads out information on scheduled broadcast programs which have not been displayed in their entirety at the current time to display the information in the form of the sliding banner. The broadcast schedules may comprise viewing schedules or recording schedules.

Figure 2 is a detailed block diagram of the image display apparatus of Figure 1. In Figure 2, the image display apparatus 100 comprises a user interface unit 130, a timer 140, a signal receiver 150, and a display 160, in addition to the storage unit 110 and controller 120 of Figure 1.

The user interface unit 130 receives input regarding the sliding banner display period and the number of scheduled broadcast programs displayed in the form of the sliding banner.

The user interface unit 130 displays the EPG information received through the signal receiver 150, and a user interface capable of selecting a broadcast schedule setting function on the display 160. The broadcast schedule setting may comprise recording schedule and viewing schedule functions, the sliding banner display period, and the number of scheduled broadcast programs displayed in the form of the sliding banner.

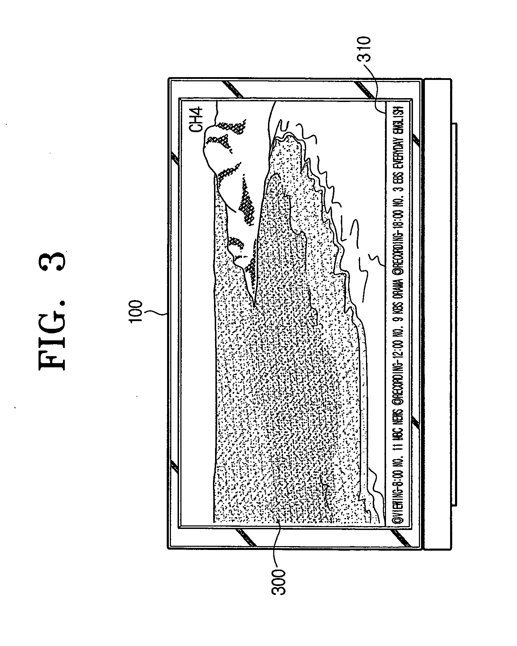

The controller 120 reads out from the storage unit 110 the broadcast program information for as many as the number of broadcast programs input through the user interface unit 130. Additionally, the controller 120 displays the read broadcast program information on the display 160 according to the sliding banner display period input through the user interface unit 130. The controller 120 arranges the broadcast program information in the order of the broadcast time to display the information in the form of the sliding banner. The broadcast program information displayed in the form of the sliding banner will be explained with reference to Figure 3.

Figure 3 is an exemplary view showing a broadcast schedule list according to an exemplary embodiment of the present invention. As shown in Figure 3, a broadcast signal is received through channel 4 on a screen 300 of the image display apparatus 100, and the broadcast schedule list of the broadcast programs scheduled for broadcast appears at the bottom of the screen 300 in the form of a sliding banner 310. The sliding banner 310 is displayed at the bottom of the screen 300 as shown in Figure 3, but may be displayed at the top of the screen 300 or at a position selected by a user.

Additionally, broadcast program information is displayed as either a viewing schedule or a recording schedule, and arranged in the order of the broadcast time of each broadcast program, sliding in one direction.

The timer 140 computes the current time from the time recorded in a system time table (STT) which is contained in the broadcast signal received through the signal receiver 150.

The controller 120 compares the current time detected by the timer 140 to the broadcast time of the broadcast program stored in the storage unit 110. If the current time corresponds to the broadcast time, the controller 12 may perform scheduled recording or scheduled viewing.

In other words, the controller 120 changes a receiving channel to a scheduled channel, receives the scheduled broadcast program through the signal receiver 150, and displays the received broadcast program on the display 160.

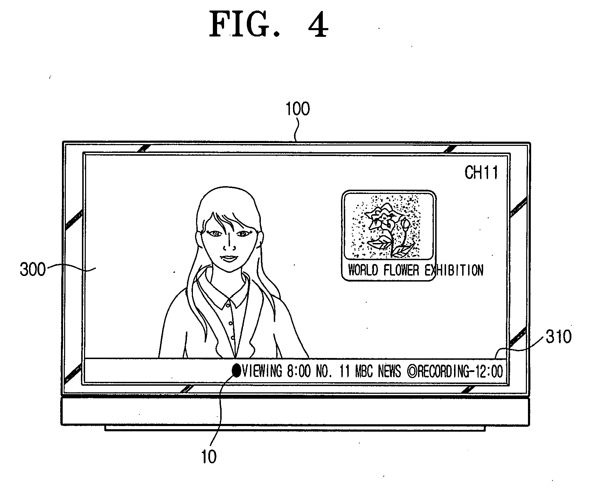

Additionally, the controller 120 causes a light to flash on the screen to indicate information on a currently received broadcast program from the information on the scheduled broadcast programs being displayed according to the sliding banner display period set at the bottom of the screen, and thus a user may check the information. This operation of the controller 120 will be explained in detail with reference to Figure 4.

Figure 4 is an exemplary view showing a broadcast schedule list when the broadcast programs scheduled for broadcast are received. In Figure 4, channel 11 scheduled for viewing is received and displayed on the screen 300 of the image display apparatus 100. The light 10 flashes on the screen to indicate the information on the currently received broadcast program from the broadcast program information displayed on the sliding banner 310.

The information on the currently received broadcast program may be displayed in a different color, a different calligraphic style, and a different font size from other broadcast programs being displayed sliding across the display screen. Additionally, the information on the currently received broadcast program may be displayed together with text informing the user that the broadcast is currently received.

Additionally, the broadcast schedule list slides according to the sliding banner display period and the number of the broadcast programs, set on the user interface in the same manner as in Figure 3.

Accordingly, it is possible to check whether the broadcast programs scheduled for broadcast are currently being received, and to check information on the remaining scheduled broadcast programs, on the sliding banner.

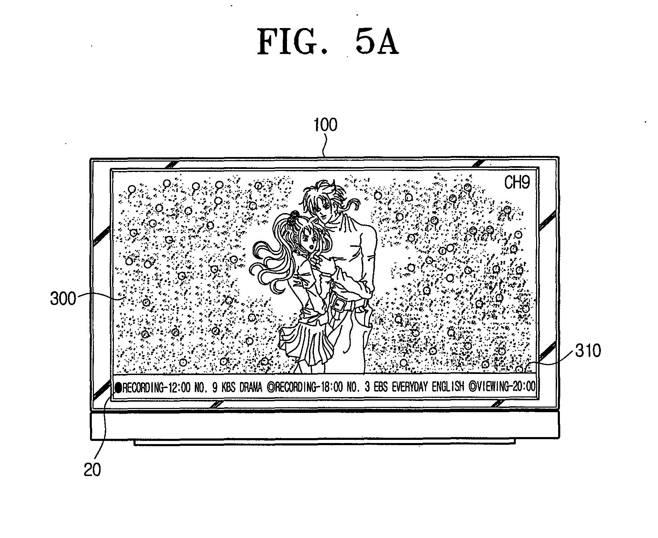

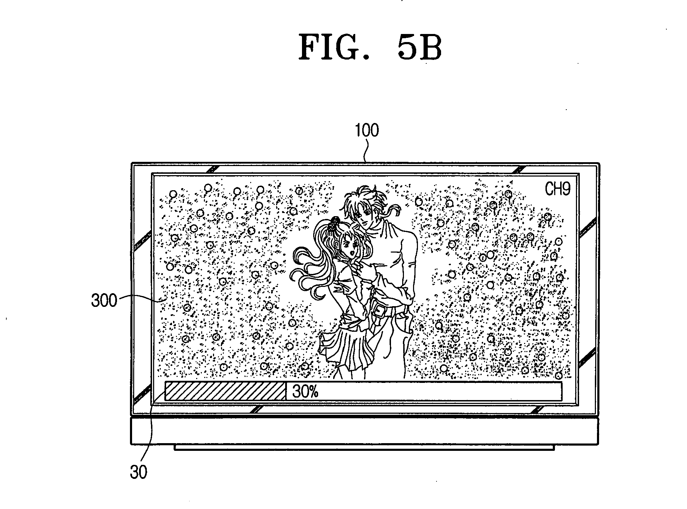

If a broadcast program scheduled for recording is received, the controller 120 may record the broadcast program and display a recording progress bar indicating the recording status of the received broadcast program on the screen. The recording progress bar and the sliding banner may be displayed simultaneously or alternately. The period in which the recording progress bar is displayed may be set to be the same period as the sliding banner display period. This operation of the controller 120 will be explained in detail with reference to Figures 5A and 5B.

Figure 5A is an exemplary view showing a broadcast schedule list when the broadcast program scheduled for recording is received. In Figure 5A, channel 9 scheduled for recording is currently received, displayed, and recorded on the screen 300 of the image display apparatus 100. The light 20 flashes on the screen to indicate information on a currently recorded broadcast program.

The channel 11 of Figure 4 is deleted from the broadcast schedule list, and the broadcast program information for as many broadcast programs as are set by the user interface is read out from the storage unit 110 and slides across the display screen.

Figure 5B is an exemplary view showing the recording progress bar when the broadcast program scheduled for recording is received. In Figure 5B, a recording progress bar 30 indicating the recording status is displayed on the screen 300 of the image display apparatus 100.

Referring to Figures 5A and 5B, a broadcast program of channel 9 scheduled for recording is currently being received, and the recording progress bar 30 and sliding banner 310 are alternately displayed according to a regular period until the recording is completed.

Accordingly, information on the recording progress of the currently recorded broadcast program and information on the remaining scheduled broadcast programs may be checked through the recording progress bar and the sliding banner.

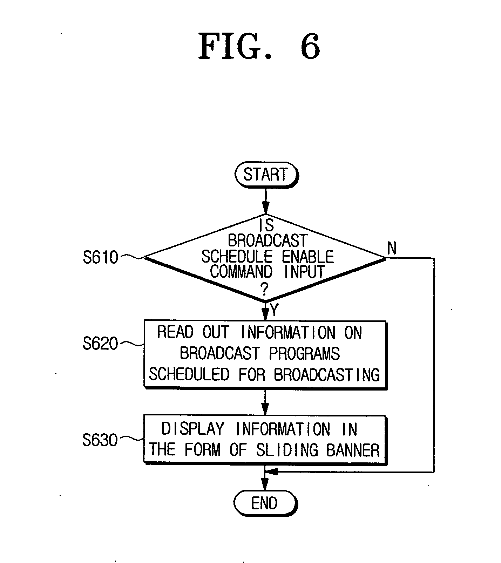

Figure 6 is a flowchart explaining a method for displaying a broadcast schedule list of an image display apparatus according to another exemplary embodiment of the present invention. In Figure 6, if a specific broadcast program is scheduled for broadcast using the EPG information received from the broadcast station, information on the scheduled broadcast program may be stored. The stored broadcast program information may comprise information relating to the name of the broadcast station providing the broadcast program, the channel number of the received broadcast, the broadcast time of the broadcast program, and the broadcast program title. The broadcast schedules may comprise viewing schedules or recording schedules.

Subsequently, if a broadcast schedule enable command is input in operation S610, the information on the scheduled broadcast programs may be read out in operation S620 to be displayed in the form of a sliding banner on one side of a screen in operation S630. The broadcast schedule enable command may be input by a user or input according to a preset period. The displayed program information refers to information on scheduled broadcast programs which have not been displayed in their entirety at the current time.

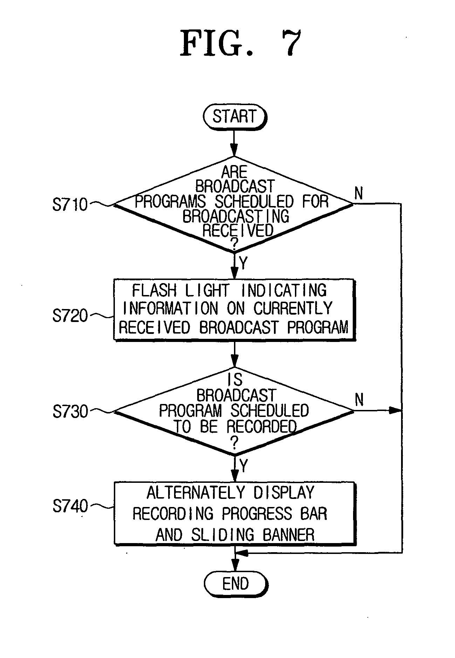

Figure 7 is a flowchart explaining in detail the method of Figure 6 according to another exemplary embodiment of the present invention. In Figure 7, if the broadcast program information, as displayed in operation S630 described above is received in operation S710, the received broadcast program may be displayed on the screen. Additionally, a light indicating information on the currently received broadcast program from the broadcast program information displayed in the form of the sliding banner at operation S630 may flash on the screen in operation S720, and thus a user may check the information.

The information on the currently received broadcast program may be displayed in a different color, a different calligraphic style, and a different font size from other broadcast programs being displayed sliding across the display screen. Additionally, the information on the currently received broadcast program may be displayed together with text informing the user that the broadcast is currently received.

If the broadcast program received at operation S710 is scheduled to be recorded in operation S730, the received broadcast program may be recorded. Additionally, a recording progress bar indicating the recording status, and the sliding banner of operation S720 may be alternately displayed in operation S740. Alternatively, the recording progress bar and the sliding banner may be simultaneously displayed.

In this situation, the recording progress bar and the sliding banner may be displayed on at least one of the bottom or the top of the screen.

As described above, in the exemplary embodiments of the present invention, the list of the broadcast programs scheduled for recording is displayed in the form of a sliding banner on one side of the screen. The light flashes on the screen to indicate the information on the currently received broadcast program from the scheduled broadcast programs, which enables the user to check the information. Accordingly, the user may easily confirm the schedule list without accessing the corresponding menu individually in order to check the scheduled broadcast programs. Additionally, an obstacle to viewing broadcasts caused by having to check the schedule list may be reduced, and thus user convenience can be enhanced.

The foregoing exemplary embodiments and advantages are merely exemplary and are not to be construed as limiting the scope of the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An image display apparatus (100) comprising:
a storage unit (110) arranged to store information on broadcast programmes scheduled to be recorded; and
a controller (120) arranged to read the stored recording schedule information and to display the recording schedule information in the form of a sliding banner (310) on one side of a screen (160),
further comprising a user interface unit (130) arranged to receive a user input regarding a sliding banner display period and the number of broadcast programmes to be displayed in the form of the sliding banner,
wherein the controller is arranged to read from the storage unit the broadcast programme information for as man as the number of the broadcast
programmes input through the user interface unit, and to arrange the read broadcast programme information in the order of the broadcast time, and to display the read broadcast programme information in the form of the sliding banner according to the input sliding banner
display period.

2. The apparatus as claimed in claim 1, wherein the controller (120) is arranged to cause a light to flash on the screen so as to indicate information on a currently received broadcast programme from the broadcast programme information.

3. The apparatus as claimed in claim 2, wherein the controller (120) is further arranged to alternately display a recording progress bar indicating the recording status of the currently received broadcast programme and the sliding banner.

4. The apparatus as claimed in any of claims 1 to 3, wherein the controller (120) is arranged to display a recording progress bar (30) to indicate the recording status,
if the broadcast programmes scheduled for broadcast are received and recorded.

5. The apparatus as claimed in claim 4, wherein the controller (120) is arranged to alternately display the recording progress bar and the sliding banner.

6. The apparatus as claimed in any one of the preceding claims, wherein the sliding banner is displayable at a bottom portion of the screen.

7. The apparatus as claimed in any preceding claim, wherein the controller (120) is arranged to change at least one of the display color, the font size and the display text of the information on the currently received broadcast programme from the broadcast programme information displayed in the form of the sliding banner to a type different from information on other broadcast programmes, and to display the information, if one of the broadcast programmes scheduled for broadcast is received.

8. A method for displaying a broadcast schedule list, comprising:
reading information on broadcast programmes scheduled to be recorded, if a schedule enable command is input;
displaying the read recording schedule information in the form of a sliding banner (310) in a side portion of a screen, and
receiving a user input regarding a sliding banner display period and the number of broadcast programmes to be displayed in the form of the sliding banner,
wherein the displaying comprises arranging the broadcast programme information for as many as the number of broadcast programmes input through by the user, arranging the broadcast programme information in the order of the broadcast time, and displaying the read broadcast programme information in the form of the sliding banner according to the input sliding banner display period.

9. The method as claimed in claim 8, further comprising flashing a light to indicate information on a currently received broadcast programme from the broadcast programme information displayed in the form of the sliding banner, if the broadcast programmes scheduled for broadcast are received.

10. The method as claimed in claim 9, wherein the sliding banner on which the light flashes is displayed alternately with a recording progress bar indicating the recording status, if a broadcast programme scheduled for recording is received.

11. The method as claimed in claim 8 or 9, further comprising displaying a recording progress bar (30) indicating the recording status, if the broadcast programmes scheduled for broadcast are received and recorded.

12. The method as claimed in claim 8, 10 or 11, wherein a recording progress bar is displayed alternately with the sliding banner.

13. The method as claimed in any one of claims 8 to 12, wherein the sliding banner is displayed in a bottom portion of the screen.

14. The method as claimed in claim 8, further comprising changing at least one of the display color, the font size and the display text of the information on the currently received broadcast programme from the broadcast programme information displayed in the form of the sliding banner to a type different from information on other broadcast programmes, and displaying the information, if one of the broadcast programmes scheduled for broadcast is received.

## Patentansprüche

1. Bildanzeigevorrichtung (100), umfassend:
eine Speichereinheit (110), die angeordnet ist zum Speichern von Informationen über Rundfunkprogramme, die zur Aufzeichnung terminiert sind; und
eine Steuerung (120), die angeordnet ist zum Lesen der gespeicherten Aufzeichnungstermin-Informationen und zum Anzeigen der Aufzeichnungstermin-Informationen in der Form eines gleitenden Banners (310) auf einer Seite eines Bildschirms (160),
ferner umfassend eine Benutzerschnittstelleneinheit (130), die angeordnet ist zum Empfangen einer Benutzereingabe bezüglich einer Anzeigeperiode für das gleitende Banner und der Anzahl von Rundfunkprogrammen, die in der Form des gleitenden Banners anzuzeigen sind,
wobei die Steuerung angeordnet ist zum Lesen der Rundfunkprogramm-Informationen aus der Speichereinheit für so viele wie die Anzahl der durch die Benutzerschnittstelleneinheit eingegebene Anzahl der Rundfunkprogramme und zum Anordnen der gelesenen Rundfunkprogramm-Informationen in der Reihenfolge der Ausstrahlungszeit und zum Anzeigen der gelesenen Rundfunkprogramm-Informationen in der Form des gleitenden Banners gemäß der eingegebenen Anzeigeperiode für das gleitende Banner.

2. Vorrichtung nach Anspruch 1, wobei die Steuerung (120) angeordnet ist, um zu bewirken, dass ein Licht auf dem Bildschirm blinkt, um Informationen über ein gegenwärtig empfangenes Rundfunkprogramm aus den Rundfunkprogramm-Informationen anzugeben.

3. Vorrichtung nach Anspruch 2, wobei die Steuerung (120) ferner angeordnet ist, um einen Aufzeichnungsfortschrittsbalken, der den Aufzeichnungsstatus des gegenwärtig empfangenen Rundfunkprogramms angibt, und das gleitende Banner abwechselnd anzuzeigen.

4. Vorrichtung nach einem der Ansprüche 1 bis 3, wobei die Steuerung (120) angeordnet ist zum Anzeigen eines Aufzeichnungsfortschrittsbalkens (30), um den Aufzeichnungsstatus anzugeben, wenn die Rundfunkprogramme, die für Ausstrahlung terminiert sind, empfangen und aufgezeichnet werden.

5. Vorrichtung nach Anspruch 4, wobei die Steuerung (120) angeordnet ist, um den Aufzeichnungsfortschrittsbalken und das gleitende Banner abwechselnd anzuzeigen.

6. Vorrichtung nach einem der vorstehenden Ansprüche, wobei das gleitende Banner auf einem unteren Abschnitt des Bildschirms anzeigbar ist.

7. Vorrichtung nach einem der vorstehenden Ansprüche, wobei die Steuerung (120) angeordnet ist zum Verändern mindestens eines der Anzeigefarbe, der Schriftgröße und des Anzeigetexts der Informationen über das gegenwärtig empfangene Rundfunkprogramm aus den Rundfunkprogramm-Informationen, die in der Form des gleitenden Banners angezeigt werden, zu einem Typ, der von Informationen über andere Rundfunkprogramme verschieden ist, und zum Anzeigen der Informationen, wenn eines der für Ausstrahlung terminierten Rundfunkprogramme empfangen wird.

8. Verfahren zum Anzeigen einer Ausstrahlungsterminliste, umfassend:
Lesen von Informationen über Rundfunkprogramme, die für Aufzeichnung terminiert sind, wenn ein Terminaktivierungsbefehl eingegeben wird;
Anzeigen der gelesenen Aufzeichnungstermin-Informationen in der Form eines gleitenden Banners (310) in einem seitlichen Abschnitt eines Bildschirms, und
Empfangen einer Benutzereingabe bezüglich einer Anzeigeperiode für das gleitende Banner und der Anzahl von Rundfunkprogrammen, die in der Form des gleitenden Banners anzuzeigen sind,
wobei das Anzeigen umfasst, die Rundfunkprogramm-Informationen für so viele wie die Anzahl der durch den Benutzer eingegebenen Anzahl von Rundfunkprogrammen anzuordnen, die Rundfunkprogramm-Informationen in der Reihenfolge der Ausstrahlungszeit anzuordnen und die gelesenen Rundfunkprogramm-Informationen in der Form des gleitenden Banners gemäß der eingegebenen Anzeigeperiode für das gleitende Banner anzuzeigen.

9. Verfahren nach Anspruch 8, ferner umfassend Blinken eines Lichts, um Informationen über ein gegenwärtig empfangenes Rundfunkprogramm aus den in der Form des gleitenden Banners angezeigten Rundfunkprogramm-Informationen anzugeben, wenn die für Ausstrahlung terminierten Rundfunkprogramme empfangen werden.

10. Verfahren nach Anspruch 9, wobei das gleitende Banner, auf dem das Licht blinkt, abwechselnd mit einem Aufzeichnungsfortschrittsbalken, der den Aufzeichnungsstatus angibt, angezeigt wird, wenn ein für Aufzeichnung terminiertes Rundfunkprogramm empfangen wird.

11. Verfahren nach Anspruch 8 oder 9, ferner umfassend Anzeigen eines Aufzeichnungsfortschrittsbalkens (30), der den Aufzeichnungsstatus angibt, wenn die für Ausstrahlung terminierten Rundfunkprogramme empfangen und aufgezeichnet werden.

12. Verfahren nach Anspruch 8, 10 oder 11, wobei ein Aufzeichnungsfortschrittsbalken abwechselnd mit dem gleitenden Banner angezeigt wird.

13. Verfahren nach einem der Ansprüche 8 bis 12, wobei das gleitende Banner in einem unteren Abschnitt des Bildschirms angezeigt wird.

14. Verfahren nach Anspruch 8, ferner umfassend Verändern mindestens eines der Anzeigefarbe, der Schriftgröße und des Anzeigetexts der Informationen über das gegenwärtig empfangene Rundfunkprogramm aus den Rundfunkprogramm-Informationen, die in der Form des gleitenden Banners angezeigt werden, zu einem Typ, der von Informationen über andere Rundfunkprogramme verschieden ist, und Anzeigen der Informationen, wenn eines der für Ausstrahlung terminierten Rundfunkprogramme empfangen wird.

## Revendications

1. Appareil d'affichage d'image (100), comprenant :
une unité de stockage (110) agencée pour mémoriser des informations relatives à des programmes de diffusion à enregistrement programmé ; et
une unité de commande (120), agencée pour lire les informations d'enregistrement programmé mémorisées et afficher les informations d'enregistrement programmé sous forme de bannière défilante (310) sur un côté d'un écran (160) ;
comprenant en outre une unité d'interface utilisateur (130) agencée pour recevoir une entrée d'utilisateur concernant une période d'affichage de bannière défilante et le nombre de programmes de diffusion à afficher sous forme de bannière défilante,
dans lequel l'unité de commande est agencée pour lire depuis l'unité de mémorisation les informations de programmes de diffusion d'autant de programmes de diffusion que le nombre entré par l'intermédiaire de l'unité d'interface utilisateur, et agencer les informations de programmes de diffusion lues dans l'ordre des heures de diffusion, et afficher les informations de programme de diffusion lues sous forme de bannière défilante en fonction de la période d'affichage de bannière défilante entrée.

2. Appareil selon la revendication 1, dans lequel l'unité de commande (120) est agencée pour faire clignoter un témoin sur l'écran de façon à indiquer des informations relatives à un programme de diffusion en cours de réception parmi les informations de programmes de diffusion.

3. Appareil selon la revendication 2, dans lequel l'unité de commande (120) est agencée en outre pour afficher en alternance une barre de progression d'enregistrement indiquant le statut de l'enregistrement du programme de diffusion en cours de réception et la bannière défilante.

4. Appareil selon l'une quelconque des revendications 1 à 3, dans lequel l'unité de commande (120) est agencée pour afficher une barre de progression d'enregistrement (30) afin d'indiquer le statut de l'enregistrement, si les programmes de diffusion à diffusion programmée sont reçus et enregistrés.

5. Appareil selon la revendication 4, dans lequel l'unité de commande (120) est agencée pour afficher en alternance la barre de progression de l'enregistrement et la bannière défilante.

6. Appareil selon l'une quelconque des revendications précédentes, dans lequel la bannière défilante est affichable dans une partie inférieure de l'écran.

7. Appareil selon l'une quelconque des revendications précédentes, dans lequel l'unité de commande (120) est agencée pour changer au moins un élément parmi la couleur de l'affichage, la taille de la police de caractères et le texte d'affichage des informations relatives au programme de diffusion en cours de réception parmi les informations de programmes de diffusion affichées sous forme de bannière défilante en un type différent de celui des informations relatives aux autres programmes de diffusion, et afficher les informations si l'un des programmes de diffusion à diffusion programmée est reçu.

8. Procédé d'affichage d'une liste de programmation de diffusion, comprenant :
la lecture d'informations relatives à des programmes de diffusion à enregistrement programmé, si une commande d'activation de programmation est entrée ;
l'affichage des informations d'enregistrement programmé lues sous forme de bannière défilante (310) sur une partie latérale côté d'un écran, et
la réception d'une entrée d'utilisateur concernant une période d'affichage de bannière défilante et le nombre de programmes de diffusion à afficher sous forme de bannière défilante,
l'affichage comprenant l'agencement des informations de programmes de diffusion pour autant de programmes de diffusion que le nombre entré par l'utilisateur, l'agencement des informations de programmes de diffusion dans l'ordre des heures de diffusion, et l'affichage des informations de programmes de diffusion lues sous forme de bannière défilante en fonction de la période d'affichage de bannière défilante entrée.

9. Procédé selon la revendication 8, comprenant en outre le clignotement d'un témoin en vue d'indiquer des informations relatives à un programme de diffusion en cours de réception parmi les informations de programmes de diffusion affichées sous forme de bannière défilante, si les programmes de diffusion à diffusion programmée sont reçus.

10. Procédé selon la revendication 9, dans lequel la bannière défilante sur laquelle le témoin clignote est affichée en alternance avec une barre de progression d'enregistrement indiquant le statut de l'enregistrement, si un programme de diffusion à enregistrement programmé est reçu.

11. Procédé selon la revendication 8 ou 9, comprenant en outre l'affichage d'une barre de progression d'enregistrement (30) indiquant le statut de l'enregistrement, si les programmes de diffusion à diffusion programmée sont reçus et enregistrés.

12. Procédé selon la revendication 8, 10 ou 11, dans lequel une barre de progression de l'enregistrement est affichée en alternance avec la bannière défilante.

13. Procédé selon l'une quelconque des revendications 8 à 12, dans lequel la bannière défilante est affichée dans une partie inférieure de l'écran.

14. Procédé selon la revendication 8, comprenant en outre le changement d'au moins un élément parmi la couleur de l'affichage, la taille de la police de caractères et le texte d'affichage des informations relatives au programme de diffusion en cours de réception parmi les informations de programmes de diffusion affichées sous forme de bannière défilante en un type différent de celui des informations relatives aux autres programmes de diffusion, et l'affichage des informations, si l'un des programmes de diffusion à diffusion programmée est reçu.
